(19) Europäisches Patentamt
European Patent Office
Office européen des brevets

(11) **EP 4 481 974 A1**

(12) **EUROPEAN PATENT APPLICATION**

(43) Date of publication:
**25.12.2024 Bulletin 2024/52**

(21) Application number: **23209071.2**

(22) Date of filing: **10.11.2023**

(51) International Patent Classification (IPC):
**H02J 3/00** (2006.01)    **H02J 3/32** (2006.01)
**H02J 3/38** (2006.01)

(52) Cooperative Patent Classification (CPC):
**H02J 3/32; H02J 3/003; H02J 3/381;** H02J 2300/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2023 CN 202310755616**

(71) Applicant: **Sungrow Power Supply Co., Ltd.**
**Hefei, Anhui 230088 (CN)**

(72) Inventor: **LIU, Xing**
**Hefei, 230088 (CN)**

(74) Representative: **Rooney, John-Paul**
**Withers & Rogers LLP**
**2 London Bridge**
**London SE1 9RA (GB)**

(54) **ENERGY STORAGE CONTROL METHOD AND APPARATUS FOR MICRO GRID SYSTEM, AND MICRO GRID SYSTEM**

(57)    An energy storage control method and apparatus for a micro-grid system and a micro-grid system are provided. The method includes: for a target period within a first operation period, based on first predicted operation parameters of the micro-grid system in the target period, obtaining, via a first control model, a first control parameter of the energy storage unit in the target period; and for a target period within a second operation period, based on first historical state parameters of the micro-grid system before the target period, obtaining, via a second control model, a second control parameter of the energy storage unit in the target period. In this way, the energy storage regulation of the entire life cycle of the micro-grid system can be realized, effectively reducing the user electricity cost.

For a target period within a first operation period, obtain first control parameters of the energy storage unit in the target period via a first control model, based on first predicted operation parameters of the micro-grid system in the target period — 110

For a target period within a second operation period, obtain the second control parameter of the energy storage unit in the target period via a second control model, based on first history state parameters of the micro-grid system before the target period — 120

**Figure 1**

**Description**

**FIELD**

The present disclosure relates to the field of energy storage control technology, and in particular to, an energy storage control method and apparatus for a micro-grid system and a micro-grid system.

**BACKGROUND**

Micro-Grid refers to a small power generation and distribution system composed of new energy power generation apparatuses, energy storage apparatuses, energy conversion apparatuses, loads, monitoring and protection apparatuses, etc. Common micro-grids include household energy storage power stations, park-level micro-grids, etc. The new energy power generation apparatuses equipped in these micro-grids can use new energy sources, such as light energy and wind energy, to generate electricity, and the power generated in the new energy power generation apparatuses can be stored in energy storage batteries. The energy storage batteries are discharged at night to improve the self-consumption rate of new energy power.

Market electricity prices fluctuate with uncertainty. According to the market electricity price trend, the energy storage batteries can selectively be charged when the market electricity price is low and supply power to the loads when the market electricity price is high, so as to reduce the electricity cost of the micro-grid.

Currently, it is an urgent technical problem to be solved how to intelligently regulate energy storage in a micro-grid to reduce the electricity costs for the users.

**SUMMARY**

The present disclosure aims to solve at least one of the technical problems existing in the conventional technology. To this end, an energy storage control method and apparatus for a micro-grid system and a micro-grid system are provided according to the present disclosure, which can realize energy storage regulation throughout the entire life cycle of the micro-grid system and effectively reduce the electricity costs for the users.

In a first aspect, an energy storage control method for a micro-grid system is provided according to the present disclosure. The micro-grid system includes a new energy power generation unit, an energy storage unit and a load unit. The method includes:

for a target period within a first operation period, based on first predicted operation parameters of the micro-grid system in the target period, obtaining, via a first control model, a first control parameter of the energy storage unit in the target period; and

for a target period within a second operation period, based on first historical state parameters of the micro-grid system before the target period, obtaining, via a second control model, a second control parameter of the energy storage unit in the target period;

where the second operation period is after the first operation period, and the first predicted operation parameters include a first predicted generated power value of power-generation, a first predicted load power value and a first predicted electricity price value of the micro-grid system, the first historical state parameters include a first actual generated power value of power-generation, a first actual load power value, a first actual electricity price value and a first state of charge for energy storage of the micro-grid system;

the first control model and the second control model are obtained in advance, the first control model is a dynamic programming model, and the second control model is trained through a reinforcement learning algorithm.

According to the energy storage control method for a micro-grid system provided by the embodiments of the present disclosure, by dividing the time scales of the micro-grid system operation, the dynamic programming model is solved in the first operation period, and the model of deep reinforcement learning algorithm is used for solutions in the second operation period. In this way, the energy storage regulation of the entire life cycle of the micro-grid system can be realized, effectively reducing the user electricity cost.

In an embodiment of the present disclosure, for the target period within the second operation period, the method further includes:

based on second predicted operation parameters of the micro-grid system in the target period, obtaining, via a first control model, a third control parameter of the energy storage unit in the target period;

where the second predicted operation parameters include a second predicted generated power value of power-generation, a second predicted load power value and a second predicted electricity price value of the micro-grid system, the second predicted operation parameters are outputs for a micro-grid system prediction model, the micro-grid system prediction model is obtained by training based on samples of operation parameters of the micro-grid system;

after obtaining the third control parameter of the energy storage unit in the target period, the method further includes: in the target period, controlling, based on the second control parameter or the third control parameter, operation of the energy storage unit.

In an embodiment of the present disclosure, the in the target period, controlling, based on the second control parameter or the third control parameter, operation of the energy storage unit, includes:

acquiring first evaluation parameters of the micro-grid system operating, in a second historical operation period, based on the third control parameter outputted by the first control model and second evaluation parameters of the micro-grid system operating, in the second historical operation period, based on the second control parameter outputted by the second control model;

on determining that the first evaluation parameters are superior to the second evaluation parameters, controlling operation of the energy storage unit based on the third control parameter;

on determining that the second evaluation parameters are superior to the first evaluation parameters, controlling operation of the energy storage unit based on the second control parameter;

where the second historical operation period is a period within the second operation period, and the second historical operation period is before the target period.

In an embodiment of the present disclosure, the first evaluation parameters include at least two of a first electricity expenditure, a first energy storage capacity decay cost and a first self-consumption rate; the second evaluation parameters include at least two of a second electricity expenditure, a second energy storage capacity decay cost and a second self-consumption rate; and the on determining that the first evaluation parameters are superior to the second evaluation parameters includes:
determining that at least two parameters from the first evaluation parameters are superior to corresponding parameters from the second evaluation parameters.
In an embodiment of the present disclosure, the first predicted operation parameter in the target period is determined based on operation parameters of one or more first historical operation periods adjacent to the target period, and the first historical operation period is within the first operation period.
In an embodiment of the present disclosure, the first predicted operation parameter is a weighted average of operation parameter values in a plurality of the first historical operation periods, and weight coefficients corresponding to the respective first historical operation periods are proportional to the adjacency between the respective first historical operation periods and the target period.
In an embodiment of the present disclosure, the first control model is the dynamic programming model targeting at a lowest electricity cost of the micro-grid system, a minimum capacity decay cost of the energy storage unit and a maximum self-consumption rate of the new energy power generation unit.
In an embodiment of the present disclosure, the second control model is trained by:

establishing an environment to operate the micro-grid system, with the energy storage unit as an intelligent agent;

based on a state of the environment at a current moment, outputting an action of the intelligent agent; and based on the action of the agent, feeding back, by the environment, a state and a reward at a next moment; and

obtaining the second control model via iterative training;

where the state of the environment includes a load power, a generated power of new energy power generation, an electricity price, an state of charge for energy storage and energy storage output data, the action of the intelligent agent is an output direction and power magnitude of the energy storage unit, and the reward of environmental includes an electricity cost reward, a reward for state of charge within a limit, an energy storage capacity decay cost reward, and a self-consumption rate reward.

In a second aspect, an energy storage control apparatus of the micro-grid system is provided according to the present disclosure. The micro-grid system includes a new energy power generation unit, an energy storage unit and a load unit. The apparatus includes:

a first processing module, configured to, for a target period within a first operation period, obtain a first control parameter of the energy storage unit in a target period based on first predicted operation parameters of the micro-grid system in the target period via a first control model;

a second processing module, configured to, for a target period within a second operation period, obtain a second control parameter of the energy storage unit in the target period based on first historical state parameters of the micro-grid system before the target period via a second control model;

where the second operation period is after the first operation period, and the first predicted operation parameters include a first predicted generated power value of power-generation, a first predicted load power value and a first predicted electricity price value of the micro-grid system, the first historical state parameters include a first actual generated power value of power-generation, a first actual load power value, a first actual electricity price value and a first state of charge for energy storage of the micro-grid system;

the first control model and the second control model are obtained in advance, the first control model is a dynamic programming model, and the second control model is trained through a reinforcement learning algorithm.

According to the energy storage apparatus for a micro-grid system provided by the embodiments of the present disclosure, by dividing the time scale of the micro-grid system operation, the dynamic programming model is solved in the first operation period, and the model of deep reinforcement learning algorithm is used for solutions in the second operation period. In this way, the energy storage regulation of the entire life cycle of the micro-grid system can be realized, effectively reducing the user electricity cost.

In a third aspect, a micro-grid system is provided according to the present disclosure. The system includes: a new energy power generation unit; an energy storage unit; a load unit; and an energy management unit, where the energy management unit is connected to the new energy power generation unit, the energy storage unit and the load unit; the energy management unit is configured to determine control parameters of the energy storage unit and control operation of the energy storage unit based on the energy storage control method for the micro-grid system according to the first aspect.

In a fourth aspect, an electronic device is provided according to the present disclosure. The electronic device includes: a memory; a processor; and a computer program stored in the memory and executable on the processor; where the processor, when executing the program, implements the energy storage control method for the micro-grid system according to the first aspect.

In a fifth aspect, a non-transitory computer readable store medium is provided according to the present disclosure. The non-transitory computer readable store medium stores a computer program thereon, where the computer program, when executed by a processor, implements the energy storage control method for the micro-grid system according to the first aspect.

In a sixth aspect, a computer program product is provided according to the present disclosure. The computer program product includes: a computer program; where the computer program, when executed by a processor, implements the energy storage control method for the micro-grid system according to the first aspect.

Hereinafter, additional aspects and advantages of the present disclosure can be set forth in part in the description, in part of which can be obvious from the description or can be learned by practice of the present disclosure.

## BRIEF DESCRIPTION OF THE DRAWINGS

The above and/or additional aspects and advantages of the present disclosure can become apparent and readily understood from the description of the embodiments in conjunction with the following drawings, in which:

Figure 1 is a schematic flowchart of an energy storage control method for a micro-grid system according to an embodiment of the present disclosure;

Figure 2 is a schematic structural diagram of a micro-grid system according to an embodiment of the present disclosure;

Figure 3 is a schematic diagram of an interaction between an intelligent agent and an environment according to an embodiment of the present disclosure;

Figure 4 is a schematic diagram of operation data of a micro-grid system on a certain day according to a first embodiment of the present disclosure;

Figure 5 is a schematic diagram of operation data of a micro-grid system on a certain day according to a second embodiment of the present disclosure;

Figure 6 is a schematic diagram of operation data of a micro-grid system on a certain day according to a third embodiment of the present disclosure;

Figure 7 is a schematic diagram of operation data of a micro-grid system on a certain day according to a fourth embodiment of the present disclosure;

Figure 8 is a schematic structural diagram of an energy storage control apparatus for a micro-grid system according to an embodiment of the present disclosure; and

Figure 9 is a schematic structural diagram of an electronic device according to an embodiment of the present disclosure.

Reference signs:
new energy power generation unit 210, energy storage unit 220, load unit 230, energy management unit 240, energy converter 250, grid energy metering apparatus 260, and grid 270.

## DETAILED DESCRIPTION OF EMBODIMENTS

The technical solutions in the embodiments of the present disclosure are clearly described below with reference to the accompanying drawings in the embodiments of the present disclosure. Apparently, the described embodiments are part of the embodiments of the present disclosure rather than all of them. Based on the embodiments in the present disclosure, all other embodiments obtained by those of ordinary skilled in the art fall within the scope of protection of the present disclosure.

The terms "first" and "second", etc. in the description and claims of the present disclosure are used to distinguish similar objects and are not used to describe a specific order or sequence. It should be understood that the so used terms are interchangeable under appropriate circumstances so that the embodiments of the present disclosure can be implemented in orders other than those illustrated or described herein. In addition, the terms "first", "second" and the like are used to distinguish objects that are usually of a same type, without limiting the quantity of the objects. For example, the expression "first object" may refer to one or more objects. In addition, the wording "and/or" in the description and claims indicates at least one of the referenced objects, and the character "/" generally indicates that the referenced objects are in an "or" relationship.

Hereinafter, an energy storage control method for a micro-grid system, an energy storage control apparatus for a micro-grid system, a micro-grid system, an electronic device and readable store medium provided by the embodiments of the present disclosure are described in detail through specific embodiments and application scenarios.

The energy storage control method for a micro-grid system may be applied to a terminal. In an embodiment, it may be implemented by the hardware or software in the terminal.

The terminal includes, but is not limited to, a portable communication device such as a mobile phone or tablet computer having a touch-sensitive surface (e.g., a touch screen display and/or a touch pad). It should also be understood that, in certain embodiments, the terminal may not be a portable communication device, but rather a desktop computer having a touch-sensitive surface (e.g., a touch screen display and/or a touch pad).

In various embodiments below, a terminal including a display and a touch-sensitive surface is described. However, it should be understood that the terminal may include one or more other physical user interface devices such as a physical keyboard, mouse, and joystick and the like.

In the energy storage control method for the micro-grid system provided by the embodiments of the present disclosure, the subject implementing the energy storage control method for the micro-grid system may be an electronic device or a functional module or functional entity in the electronic device that can implement the energy storage control method for the micro-grid system. Hereinafter, the energy storage control method for the micro-grid system provided by the embodiments of the present disclosure is illustrated in the case where the method is implemented by an electronic device.

The energy storage control method for the micro-grid system provided by the embodiments of the present disclosure can perform intelligent control of the micro-grid system throughout its entire life cycle, which can effectively reduce the electricity cost for the user.

The entire life cycle of the micro-grid system refers to the entire operation time period from the beginning of connecting the micro-grid system to the grid to the end of usage.

In practical implementation, the micro-grid system may be a household power storage station, a park-level micro-grid, etc.

The micro-grid system may include a new energy power generation unit 210, an energy storage unit 220, and a load unit 230. The new energy power generation unit 210 may convert new energy into electric energy, the energy storage unit 220 may temporarily store electric energy, and the load unit 230 is a device that consumes electrical energy.

The new energy power generation unit 210 may be a photovoltaic power generation unit, a wind energy power generation unit, or other device that uses new energy to generate electricity.

The micro-grid system may further include an energy management unit 240 and an energy converter 250. The energy converter 250 may be connected to the new energy power generation unit 210, the energy storage unit 220 and the load unit 230. The energy management unit 240 is connected to the energy converter 250. The energy management unit 240 is a control device of the energy converter 250, and the energy management unit 240 implements energy storage control of the energy storage unit 220 through the energy converter 250.

For example, the new energy power generation unit 210 is a photovoltaic power generation unit, the energy converter 250 may be a converter, an inverter, an energy storage PCS or a photovoltaic inverter integrated unit and the like. And the energy management unit 240 controls the energy converter 250.

The micro-grid system may use the electric energy generated by the new energy power generation unit 210, use the electric energy of the energy storage unit 220, and use the electric energy from the connected power grid 270.

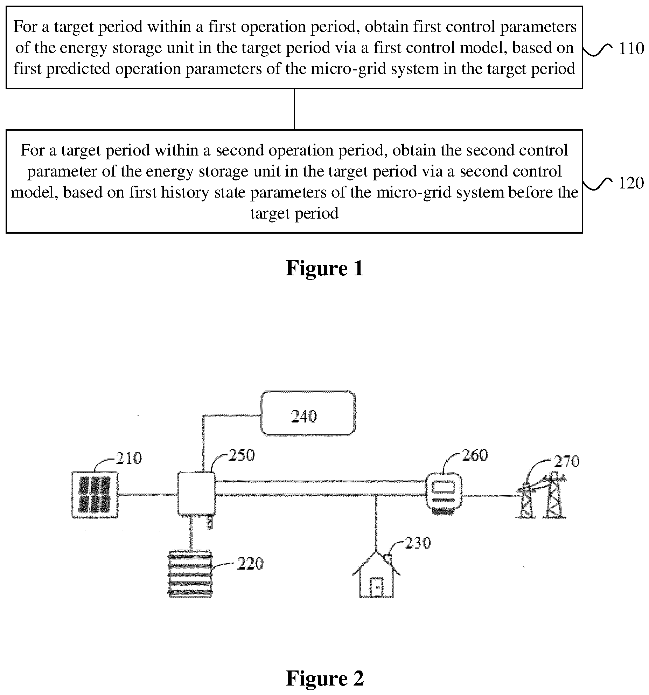

As shown in Figure 1, the energy storage control method for a micro-grid system includes: step 110 and step 120.

It should be noted that the energy storage control method for a micro-grid system is divided into short-term scale and long-term scale. The period from the time when the micro-grid system is put into use is the short-term scale, which corresponds to a first operation period. After that comes to the long-term scale, i.e., a second operation period, which is after the first operation period.

For example, in a case that it is divided by one year, the first operation period is within one year of the establishment of the micro-grid system, and the second operation period is one year after the establishment of the micro-grid system.

In step 110, for a target period within the first operation period, based on first predicted operation parameters of the micro-grid system in the target period, the first control parameters of the energy storage unit 220 in the target period are obtained through a first control model.

In this embodiment, for the target period located within the first operation period, the first control model is solved by the first predicted operation parameters corresponding to the target period, so that the first control parameters corresponding to the target period may be obtained, to control the energy storage unit 220 during the target period by using first control parameters.

In actual implementation, the first control parameters may include a power magnitude and an output direction of the energy storage unit 220, where the output direction represents whether the energy storage unit 220 selects to charge or discharge.

The first control model is acquired in advance, the first control model may be a dynamic programming model, and the first predicted operation parameters include a first predicted generated power value of power-generation, a first predicted load power value and a first predicted electricity price value of the micro-grid system.

Dynamic programming is a method used in mathematics, computer science, and economics to solve complex problems by decomposing the original problem into relatively simple sub-problems.

In this embodiment, for the first control model which is the dynamic programming model, based on the predicted values of generated power of new energy power generation, load power, and electricity price in the coming target period, the user daily electricity cost, energy storage battery capacity decay cost and self-consumption rate of the new energy power generation unit 210 and other sub-problems may be solved, to output the power magnitude and output direction of the energy storage unit 220.

In actual implementation, Gurobi, CPLEX , C VXPY and other solvers may be used to solve the first control model, to obtain the first control parameters in the target period.

In step 120, for a target period within a second operation period, based on first historical state parameters of the micro-grid system before the target period, second control parameters of the energy storage unit 220 in the target period are obtained via a second control model.

In this embodiment, for the target period within the second operation period, based on the first historical state parameters in a period of time before the target period, the second control model may be trained by a deep reinforcement learning algorithm, to obtain the second control parameters corresponding to the target period, thereby controlling the energy storage unit 220 in the target period by using the second control parameters.

The second control model is acquired in advance, and the second control model may be trained through reinforcement learning algorithm. The first historical state parameters include a first actual generated power value of power-generation, a first actual load power value, a first actual electricity price value and a first state of charge (SOC) for energy storage of the micro-grid system.

The reinforcement learning solution strategy is used to guide the machine to select the best action in different states, allowing the machine to explore the action on its own, and then continuously adjust the strategy based on feedback from the environment. The ultimate goal is to maximize the environmental benefits.

In practical implementation, the second control model may be trained through a deep reinforcement learning algorithm.

In this embodiment, after the micro-grid system enters the second operation period on a long-term scale, the deep reinforcement learning algorithm is used to realize intelligent control of the operation of the energy storage unit 220 and give full play to the adaptability and rapid decision-making ability of the deep reinforcement learning algorithm to random environments.

It should be noted that after the micro-grid system enters the second operation period on the long-term scale, since the amount of historical data measured by the micro-grid system is sufficient, there is no need to increase the amount of sample data used to train the model by means of prediction. Rather, it is sufficient to regulate intelligently by only using historical measured data from the previous period.

It can be understood that in the second operation period, the second control model with the deep reinforcement learning algorithm is used for intelligent control. The division of the first operation period and the second operation period may be based on the volume of measured data of the micro-grid system used in the training of the second control model.

For example, in a case that it is divided by one year, the first operation period is within one year of the establishment of the micro-grid system, and the second operation period is one year after the establishment of the micro-grid system. The second control model may be trained using the measured data of the micro-grid system in the first operation period.

In conventional technology, machine learning algorithms such as deep reinforcement learning are used to achieve intelligent regulation of energy storage, which requires the use of a large amount of historical data for model training. Many new household power storage stations cannot use intelligent regulation strategies before sufficient data is accumulated, which raises the user electricity costs.

In the embodiment of the present disclosure, the intelligent control takes time scale into consideration. According to different time scales, in the first operation period, the first control model is used to perform dynamic programming solutions. While in the second operation period when there is a certain amount of historical data accumulation, the second control model trained by the deep reinforcement learning algorithm is used for solutions to achieve intelligent control of the entire life cycle of the micro-grid system.

For the short-term scale, dynamic programming solutions are performed to achieve intelligent control in the early stages of operation of the newly built micro-grid system, effectively avoiding the problem of large amounts of data accumulation. In the early stages, it can effectively reduce user electricity costs.

For the long-term scale, deep reinforcement learning algorithms are used to realize intelligent control of micro-grid system operations, give full play to the adaptability and rapid decision-making ability of the deep reinforcement learning algorithm to random environments, without any prediction data.

According to the energy storage control method for a micro-grid system provided by the embodiments of the present disclosure, by dividing the time scales of the micro-grid system operation, the solution of dynamic programming model is used in the first operation period, and the solution of model using deep reinforcement learning algorithm is used in the second operation period. In this way, the energy storage regulation of the entire life cycle of the micro-grid system can be realized, effectively reducing the user electricity cost.

The first operation period is an operation period on a short-term scale, and the second operation period is an operation period on a long-term scale.

The short-term scale and long-term scale may be divided by at least one of the approaches as follows.

In a first approach, the time scales are divided by a preset duration.

For example, the first operation period is within one year after the station of the micro-grid system is established, and the second operation period is one year after the station is established.

In a second approach, the time scales are divided according to the data volume of the measured operation parameters and a preset data volume threshold.

For example, once the quantity of data entries of historical operation parameters collected by the micro-grid system reaches a set data volume threshold (such as one million entries), the second operation period begins, and before which is the first operation period.

In a third approach, the time scales are divided based on the operating cost comparison results of the simulation system of the micro-grid system.

The simulation system is a numerical simulation system for the micro-grid system, including a data receiving module, a simulation execution module and an operating cost calculation module. Simulation toolboxes such as MATLAB/Simulink and Modelica may be used to build the simulation system.

The second control model with reinforcement learning can be constantly trained and iteratively updated as historical data accumulates. Each time the second control model is trained, the energy storage output command data outputted by the second control model is introduced into the simulation system. The micro-grid system operation cost data is obtained from the operation cost calculation module in the simulation system, and is compared with the current actual micro-grid operation cost. In a case that the micro-grid system operation cost obtained in the simulation system is lower than the current actual micro-grid operation cost, then the operation period of the micro-grid system is switched to the second operation period.

In some embodiments, in a case that the target period is within the second operation period, the energy storage control method for a micro-grid system may further include:

based on second predicted operation parameters of the micro-grid system in the target period, third control parameters of the energy storage unit 220 in the target period are obtained via the first control model.

The second predicted operation parameters include a second predicted generated power value of power-generation, a second predicted load power value and a second predicted electricity price value of the micro-grid system.

In this embodiment, within the second operation period on the long-term scale, the first control model may also be used to perform dynamic programming solution to obtain the third control parameters for controlling the operation of the energy storage unit 220 in the target period.

The predicted values of dynamic programming solution using the first control model are taken as the second predicted operation parameters, and the second predicted operation parameters are the predicted value outputted by the micro-grid system prediction model. The micro-grid system prediction model is trained based on the samples of operation parameters of the micro-grid system.

The micro-grid system has certain historical data accumulation during the long-term scale. The samples of operation parameters accumulated after the micro-grid system is put into operation may be used to train the micro-grid system prediction model. The predicted values outputted by the micro-grid system prediction model are more accurate, which is beneficial to further reduce the user electricity cost.

In practical implementation, the micro-grid system prediction model may include a generated power prediction model, a load power prediction model and an electricity price prediction model, and they correspondingly output a second predicted generated power value of power-generation, a second predicted load power value and a second predicted electricity price value.

It can be understood that the micro-grid system prediction model includes different types of prediction models for power prediction of power generation, load power prediction and electricity price prediction, and the different types of prediction models are obtained by training with different samples of operation parameters.

The generated power prediction model may be trained using samples of operation parameters such as irradiance and wind speed related to new energy power generation. The load power prediction model may be trained using samples of operation parameters related to the load. The electricity price prediction model may be trained using samples of operation parameters related to electricity prices.

It should be noted that in the first operation period on the short-term scale, since the data amount of accumulated samples of operation parameters is insufficient, the predicted values solved for dynamic programming by using the first control model are not outputted by the micro-grid system prediction model.

In some embodiments, the first predicted operation parameters in the target period are determined based on operation parameters of one or more first historical operation periods adjacent to the target period, and the first historical operation periods are periods within the first operation period.

In this embodiment, an approximate method may be used to predict the first predicted operation parameters of the coming target period based on the operation parameters of one or more first historical operation periods adjacent to the target period, through short-term power generation consistency and load power consumption consistency.

For example, within the first operation period, the target period is the Sunday of the third week, then the first predicted operation parameters in the target period may be approximated based on the operation parameters of Saturday of the third week which is taken as the first historical operation period.

The first predicted operation parameters in the target period may also be approximated based on the operation parameters of the first historical operation periods from Monday to Saturday of the third week.

In some embodiments, the first predicted operation parameter is a weighted average of the operation parameters of multiple first historical operation periods, and weight coefficients corresponding to the respective first historical operation periods are proportional to the adjacency between the respective first historical operation periods and the target period.

In this embodiment, based on the short-term power generation consistency and load power consumption consistency, the weighted average value of parameters in the first historical operation periods adjacent to the target period is used as the predicted value. The closer the first historical operation period is to the target period, the greater the weight coefficient is.

For example, within the first operation period, the target period is the Sunday of the third week. The weighted average of the operation parameters in the first historical operation period from Monday to Saturday of the third week may be calculated to obtain the first predicted operation parameter, where the weight coefficients gradually increase from Monday to Saturday.

In some embodiments, after obtaining the third control parameters of the energy storage unit 220 in the target period, the energy storage control method for the micro-grid system further includes:
during the target period, operation of the energy storage unit 220 is controlled based on the second control parameter or the third control parameter.

According to different time scales, in the first operation period, the energy storage unit 220 is controlled by using the first control parameter(s) outputted by the first control model; in the second operation period, the energy storage unit 220 is controlled by using the second control parameter(s) outputted by the second control model or the third control parameter(s) outputted by the first control model.

For the second operation period on the long-term scale, the second control parameter outputted by the second control model may be used for control, or the third control parameter outputted by the first control model may be used for control. Selecting the best between the two models can effectively avoid the problem of large cumulative deviations caused by long-term running of a single model for decision-making, ensuring that user electricity cost can be steadily reduced.

In some embodiments, operation of the energy storage unit 220 is controlled based on the second control parameter or the third control parameter during the target period may include as follows.

In a second historical operation period, first evaluation parameters of the micro-grid system operating based on the third control parameter outputted by the first control model and second evaluation parameters of the micro-grid system operating based on the second control parameter outputted by the second control model are acquired.

On determining that the first evaluation parameters are superior to the second evaluation parameters, operation of the energy storage unit 220 is controlled based on the third control parameter.

On determining that the second evaluation parameters are superior to the first evaluation parameters, operation of the energy storage unit 220 is controlled based on the second control parameter.

The second historical operation period is a period within the second operation period, and the second historical operation period is before the target period.

In this embodiment, whether the micro-grid system uses the control parameters output by the first control model or the second control model in the second operation period on the long-term scale is selected for the best based on performances of the first control model and the second control model in the past period of time.

The second historical operation period is a period of time before the target period. The second historical operation period may be in units of weeks, months, quarters or years, and the target period may also be in units of weeks, months, quarters or years.

The first evaluation parameters of the micro-grid system operating based on the control parameters outputted by the first control model during the second historical operation period are acquired, and the second evaluation parameters of the micro-grid system operating based on the control parameters outputted by the second control model during the second historical operation period are acquired. The first evaluation parameter and the second evaluation parameter are compared for optimal selection.

The performance of the models in the past period of time is measured according to the evaluation parameters. The evaluation parameters may be the average daily user electricity expenditure, the average daily energy storage capacity decay cost and the average daily self-consumption rate of the two models in the past period of time.

In some embodiments, the first evaluation parameters include the first electricity expenditure, the first energy storage capacity decay cost and the first self-consumption rate, and the second evaluation parameters include the second electricity expenditure, the second energy storage capacity decay cost and the second self-consumption rate.

In this embodiment, determining that the first evaluation parameters are superior to the second evaluation parameters includes: it is determined that at least two parameters from the first evaluation parameters are superior to corresponding parameters from the second evaluation parameters.

Determining that the second evaluation parameters are superior to the first evaluation parameters includes: it is determined that at least two parameters from the second evaluation parameters are superior to corresponding parameters from the first evaluation parameters.

In this embodiment, the basis for optimal selection between the first control model and the second control model is that at least two parameters among the three parameters are superior to those of the other model. In the next period of time, the optimal model is used for intelligent control of the micro-grid system.

It should be noted that during the second operation period, the predicted values used by the first control model are the predicted values outputted by the micro-grid system prediction model. During the first operation period, the predicted values used by the first control model are not the predicted values outputted by the micro-grid system prediction model.

For the entire life cycle of the micro-grid system, the first control parameter outputted by the first control model is used for energy storage control during the first operation period, and optimal selection between the third control parameter outputted by the first control model and the second control parameter outputted by the second control model is performed for energy storage control during the second operation period.

Hereinafter, the first control model and the second control model are described in detail below.

In some embodiments, the first control model may be a dynamic programming model that targets the lowest electricity cost of the micro-grid system, the lowest capacity decay cost of the energy storage unit 220, and the highest self-consumption rate of the new energy power generation unit 210.

In this embodiment, the first control model uses the electricity cost of the micro-grid system, the capacity decay cost of the energy storage unit 220 and the self-consumption rate of the new energy power generation unit 210 as targets for calculation, which can effectively reduce the user electricity cost and extend the service life of the energy storage unit 220. In this way, the generated power can be used by itself, and the extra power can be fed into the power grid 270 to acquire electricity revenue.

In actual implementation, a first control model is established to target the lowest electricity cost of the micro-grid system, the lowest capacity decay cost of the energy storage unit 220, and the highest self-consumption rate of the new energy power generation unit 210, and take the output power and output direction of the energy storage unit 220 as control objects, with consideration of various constraints of the system.

The objective function of the first control model is as follows:

$$\min\{\sum_{i=1}^{T}[\max(grid_i,0)\times\Delta t\times price_{gird,i}-\min(gird_i,0)\times\Delta t\times price_{pv,i}]$$

$$+\sum_{i=1}^{T}\eta\times\max(p_{battery,i},0)\times\Delta t-\frac{\sum_{i=1}^{T}[pv_i\times\Delta t+\min(gird_i,0)\times\Delta t]}{\sum_{i=1}^{T}pv_i\times\Delta t}\}.$$

The constraints are as follows:

$$s.t.\begin{cases} grid_i = pv_i + p_{battery,i} - load_i \\ soc_i = soc_o + [\sum_{i=1}^{T}(-p_{battery,i}\times\Delta t)]/w\_rated \\ \forall i, soc_{\min} \leq soc_i \leq soc_{\max} \\ |p_{battery,i}| \leq p\_rated, if\ p_{battery,i} \leq 0 \\ pv_i + p_{battery,i} \leq p\_rated, if\ p_{battery,i} > 0 \end{cases}$$

where pv is the power generated by new energy, $p_{battery}$ is the power of the energy storage unit 220 for which a positive value represents discharging and a negative value represents charging, *gird* is the power taken from the grid 270 for which a negative value means feeding power to the grid 270, and *load* is the load power.

*w_rated* is the rated capacity of the energy storage unit 220, *p_rated* is the rated power of the energy storage unit 220, and $\eta$ is the capacity decay cost coefficient of the energy storage unit 220. There is a linear relationship between the capacity decay cost of the energy storage unit 220 and the total daily discharge of energy storage; *soc* refers to the state of charge of the battery, i.e., the ratio of the amount of charge stored in the battery to its total capacity.

The range of *soc* is usually between 0% and 100%, where 0% indicates that the energy storage unit 220 has been fully discharged, and 100% indicates that the energy storage unit 220 has been fully charged.

$\Delta t$ is the control interval. If for every 5 minutes, a first control parameter is obtained and a control command for the energy storage unit 220 is generated, then $\Delta t = 5/60h$.

The subscript i represents the i-th control interval, and T is the quantity of control intervals with a daily cycle. Taking 5 minutes as an example, the quantity of control intervals T=24*60/5=288.

$price_{gird}$ is the price of electricity purchased from the power grid 270 and $price_{pv}$ is the price of the feeding electricity into the grid. In general, the price of the feeding electricity into the grid is much lower than the price of electricity purchased from the power grid 270.

In this embodiment, in each control interval, the first control model outputs the first control parameters to control the power magnitude and output direction of the energy storage unit 220.

In some embodiments, the second control model is trained through the following steps:

an environment to operate the micro-grid system is established, with the energy storage unit as an intelligent agent;

based on a state of the environment at a current moment, an action of the intelligent agent is outputted; and based on the action of the agent, the environment feeds back a state and reward at a next moment;

the second control model is obtained via iterative training;

where the state of the environment include a load power, a generated power of new energy power generation, an electricity price, a state of charge for the energy storage and energy storage output data, the action of the intelligent agent is an output direction and power magnitude of the energy storage unit 220, and the reward of environment includes an electricity cost reward, a reward for state of charge within a limit, an energy storage capacity decay cost reward, and a self-consumption rate reward.

The environment to operate the micro-grid system is established. Such environment can simulate energy storage output data such as the power magnitude and output direction of the energy storage unit 220, and provide data such as the load power, generated power of new energy power generation, electricity price, and state of charge for energy storage.

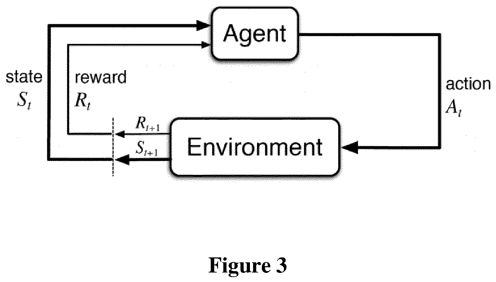

The interaction process between intelligent agent i.e., Agent and simulation environment, i.e., Environment in deep reinforcement learning is shown in Figure 3. The intelligent agent has the state $S_t$ in the environment at the current moment and outputs an action $a_t$.

Based on the action $a_t$, the environment feedbacks the state of the next moment $s_{t+1}$ and reward $r_{t+1}$. One interaction between the agent and the environment may obtain a five-tuple:

$$(s_t, a_t, r_{t+1}, s_{t+1}, done)$$

where *done* equal to one means that the current round is over, *done* equal to zero means that the current round has not ended.

The environment supports single-step simulation, which can feed back the system state at each moment, including information such as the load power, generated power of new energy power generation, electricity price, and state of charge for energy storage. The step length may be set arbitrarily, such as 5min, 15min, etc.

The historical operation data of the micro-grid system since the moment of grid connection to the present is collected, including historical data of actual load power, generated power of power-generation, electricity price data, and historical data of output power and historical state of charge of the energy storage unit 220.

A deep reinforcement learning state space is constructed. The state at a moment t is represented by symbol $S_t$. The deep reinforcement learning state space contains features such as the load, optical power, electricity price, state of charge and date of the past n moments. It may be represented by n five-tuples:

$$\{(load_i, pv_i, price_{gird,i}, soc_i, i), i \in [t-n+1, \cdots, t]\}$$

where $load_i$ represents the load power at the i-th moment, $pv_i$ represents the generated power of new energy power generation at the i-th moment, $price_{gird,i}$ represents the market electricity purchase price at the i-th moment, $soc_i$ represents the state of charge of the energy storage at the i-th moment.

An action space is constructed, the action at the moment t is $a_t = p_{battery,t} \in [-p_{rated}, p_{rated}]$. The action is a number, whose value represents the power value, and whose sign represents the charging or discharging state, namely, positive sign indicating discharging, and negative sign indicating charging.

Rewards for deep reinforcement learning are constructed, which include an electricity cost reward, reward for state of charge within a limit, energy storage capacity decay cost reward and self-consumption rate reward.

The function $r_t$ of the reward and punishment at moment t is as follows:

$$r_t = w_1 \times reward_1 + w_2 \times reward_2 + w_3 \times reward_3 + w_4 \times reward_4$$

The calculation equation of the electricity cost reward $reward_1$ is as follows:

$$reward_1 = -[\max(grid_i, 0) \times \Delta t \times price_{gird,i} - \min(gird_i, 0) \times \Delta t \times price_{pv,i}]$$

where $grid_i = pv_i + p_{battery,i} - load_i$;

The calculation equation of the reward $reward_2$ for state of charge within a limit is as follows:

$$reward_2 = \begin{cases} 1, & if \ soc_{min} \leq soc_i \leq soc_{max} \\ 0, & else \end{cases}$$

The calculation equation of the energy storage capacity decay cost reward $reward_3$ is as follows:

$$reward_3 = -\eta \times \max(p_{battery,i}, 0)$$

The self-consumption rate reward $reward_4$ is as follows:

$$reward_4 = \begin{cases} 0, & i \neq T \\ \dfrac{\sum\limits_{i=1}^{T} [pv_i + \min(gird_i, 0)]}{\sum\limits_{i=1}^{T} pv_i} \times 100, & i = T \end{cases}$$

where $w_1$, $w_2$, $w_3$, $w_4$ are the adjustment coefficients corresponding to respective rewards.

The intelligent agent fully interacts with the simulation running environment and obtains multiple five-tuples. The deep reinforcement learning algorithm, including but not limited to the DQN, SAC, A3C or other algorithms, is used for model training, until the model converges (e.g., iterate to the specified round, or the cumulative reward value of the round exceeds the specified value).

In a case that the training of the second control model meets the termination condition, the training is stopped and the model file is saved. At the same time, the optimal model file is converted by using a model conversion tool so that the converted model file is adapted to the energy management unit 240 of the micro-grid system. The energy management unit 240 performs intelligent regulation of the energy storage unit 220.

By inputting the state data of the historical period of the micro-grid system, i.e., the first historical state parameters before the target period, into the second control model, the power magnitude and output direction of the energy storage unit 220 in the target period may be obtained.

In practical implementation, the second control model may perform rolling calculations according to the frequency of issuing regulation instructions, to constantly correct the output value of the energy storage unit 220 on that day.

In this embodiment, in the second operation stage on the long-time scale, the deep reinforcement learning algorithm is used to realize intelligent regulation of the micro-grid system, giving full play to the adaptability and rapid decision-making capability of the deep reinforcement learning algorithm to random environments without any prediction data, which can effectively reduce the user electricity cost.

In conventional technology, operation is generally performed in a fixed mode in the micro-grid scene. For example, the micro-grid charges at a set power during the midnight when the electricity prices are low; the power fed by new energy sources into the grid is stored during the day when photovoltaic or other new energy sources are output; and it discharges during the peak hours in the evening when electricity prices are higher. The settings for low electricity price period and high electricity price period are fixed. In addition, the energy storage unit 220 is not fully charged during the low electricity price period as it needs to reserve some space to store the power fed by new energy sources into the grid. Hence, the purpose of reducing electricity cost cannot be effectively achieved.

In the embodiment of the present disclosure, by dividing the time scales of the micro-grid system operation, the solution of dynamic programming model is used in the first operation period, and the solution of model using deep reinforcement learning algorithm is used in the second operation period. In this way, the energy storage regulation of the entire life cycle of the micro-grid system can be realized can be realized through intelligent regulation strategies, which can effectively reduce the user electricity cost.

Intelligent regulation strategies according to an embodiment of the present disclosure are described in detail by taking operation data of the micro-grid system on a certain day as an example.

The micro-grid system is provided with the photovoltaic power generation unit for power generation. In the conventional energy storage operating mode, charging is carried out at a charging power of 1kW between 0:00 and 5:00 in the early morning. Charging is automatically stopped when the energy storage SOC reaches 0.3. During the new energy output stage, the power fed into the grid is automatically stored. In a case that the energy storage unit 220 is full at this stage, it stops operating and discharges at night.

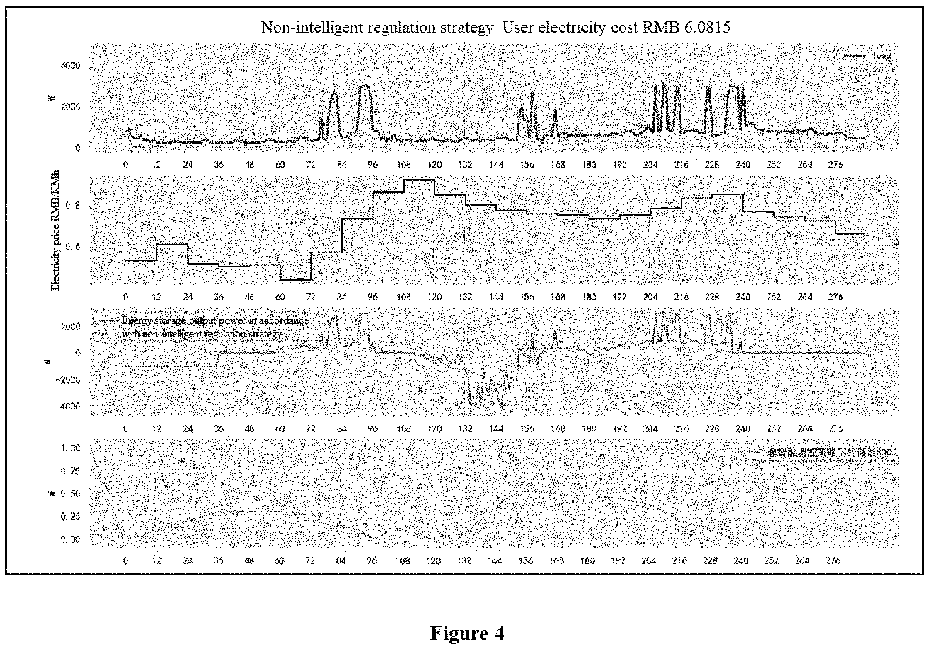

Figures 4 to 7 show schematic examples of the operation data of a micro-grid system on a certain day according to the embodiment of the present disclosure. Each of Figures 4 to 7 includes 4 sub-figures, i.e., micro-grid load and photovoltaic power curve (pv represents photovoltaic power, load represents micro-grid load), market electricity price curve, energy storage output power and energy storage SOC curve, from the top to bottom. The micro-grid load and photovoltaic power curves show that there are periods when photovoltaic power is greater than load during the day. In other words, feeding into the gird occurs.

As shown in Figure 4, the conventional energy storage mode is selected to control, which is recorded as a non-intelligent regulation strategy. It shows that the energy storage SOC remains inactive for a period of time after charging to 0.3 in the early morning. During the period of feeding into the gird, charging occurs until SOC reaches a level of about 0.5, and the energy storage is discharged at night. By doing so, the user electricity cost throughout the day is RMB 6.0815.

For the intelligent regulation strategy, the selection of energy storage output power fully considers the characteristic of market electricity prices. Charging occurs when the electricity price is low, and discharging occurs before feeding into the grid and during the high electricity price period, to achieve low-price charge and high-price discharge.

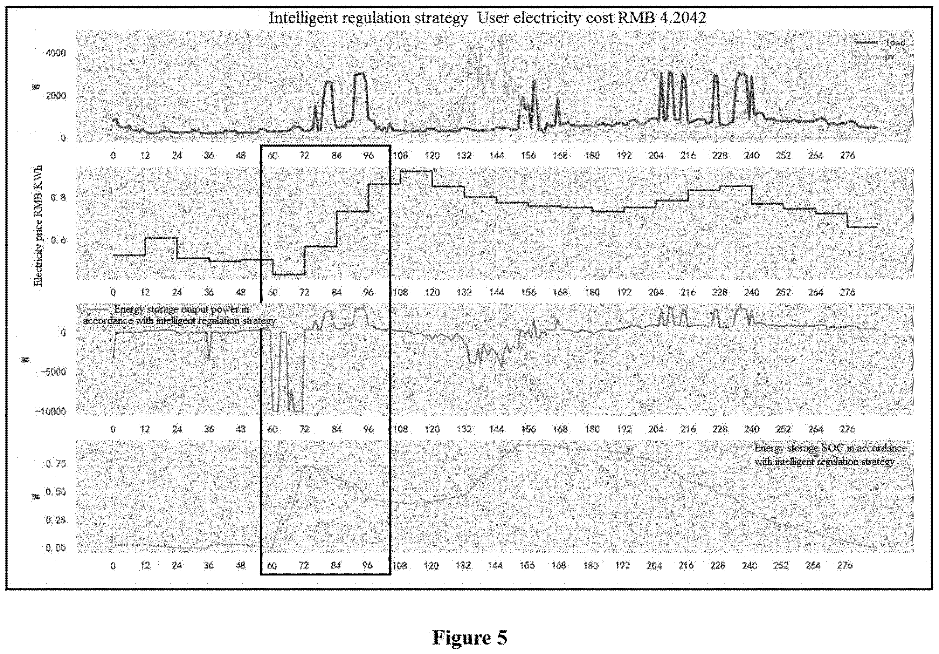

As shown in Figure 5, in the energy storage under the intelligent regulation strategy, it is selected to charge in the early morning when the electricity price is the lowest until energy storage SOC reaches up to 0.75, and to discharge during the next high electricity price period, to achieve energy storage charge and discharge arbitrage. During the period of feeding into the gird, the power fed into the grid can be stored and the energy storage unit 220 can be fully discharged at night. Through intelligent control strategy, the energy storage capacity can be fully utilized to achieve optimal low-price charge and high-price discharge. By doing so, the user electricity cost is reduced to only RMB 4.2042, which can be reduced by about 30.87% compared with the user electricity cost through the non-intelligent regulation strategy.

For the case where there are many new energy source powers feeding into the grid and exceeding the maximum storage capacity of the energy storage unit 220, since the energy storage charges in the early morning in the conventional operation mode and the SOC is charged to 0.3, when the photovoltaic power fed into the grid is increased, the energy storage is unable to fully store the photovoltaic power fed into the grid, which reduces the self-consumption rate of photovoltaic when the photovoltaic power is fed into the grid.

The intelligent regulation strategy can identify a relatively large quantity of photovoltaic power fed into the grid, and not select to charge in the early morning. Instead, it keeps the remaining capacity of the energy storage unit 220 empty. When there is a relatively large quantity of the photovoltaic power fed into the grid, it can fully store feeding photovoltaic power, to reduce quantity of the photovoltaic power fed into the grid and increase the self-consumption rate of photovoltaic power. In addition, since the energy storage does not charge in the early morning, there is no additional electricity expense. Compared with the conventional operation mode, it further reduces the user electricity cost.

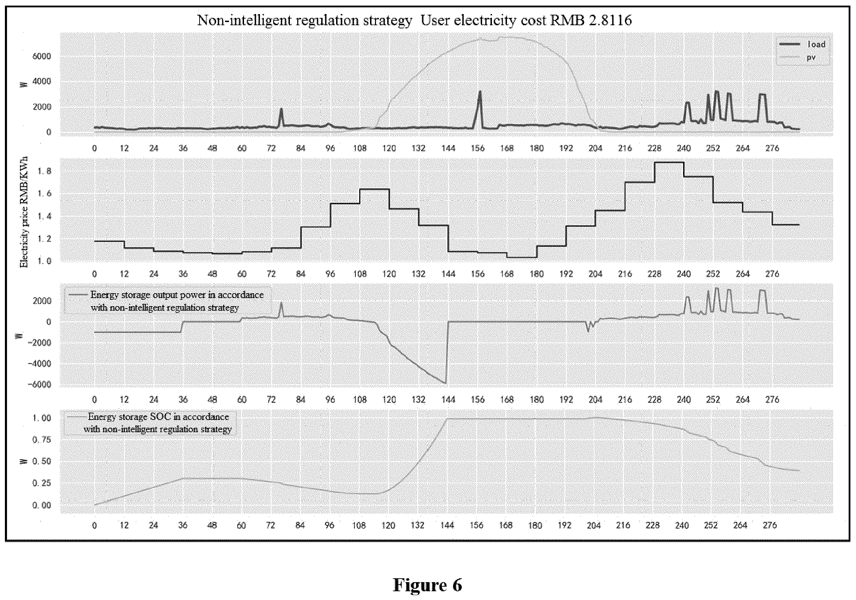

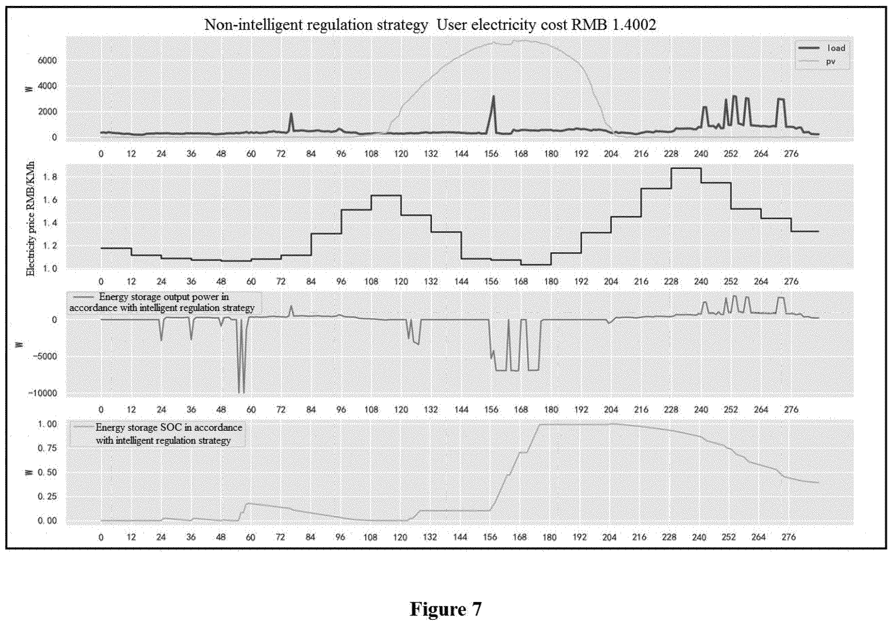

As shown in Figure 6 and Figure 7, the user electricity cost through the intelligent regulation strategy is RMB 1.4002, while the use electricity cost through the non-intelligent regulation strategy is RMB 2.8116. The intelligent regulation strategy can save 50.2 % of electricity expenditure.

In the energy storage control method for a micro-grid system of the embodiments of the present disclosure, intelligent regulation strategies are provided to achieve energy storage control, which enables high-price discharge and low-price charge of energy storage and reduces electricity costs while ensuring the safety and reliability of the energy storage unit 220.

In the energy storage control method for a micro-grid system of the embodiments of the present disclosure, the implementation subject may be the energy storage control apparatus of the micro-grid system. In the embodiments of the present disclosure, as an example, the energy storage control apparatus of the micro-grid system implements the energy storage control method for the micro-grid system, to illustrate the energy storage control apparatus of the micro-grid system provided by the embodiments of the present disclosure.

An energy storage control apparatus for the micro-grid system is further provided according to the present disclosure.

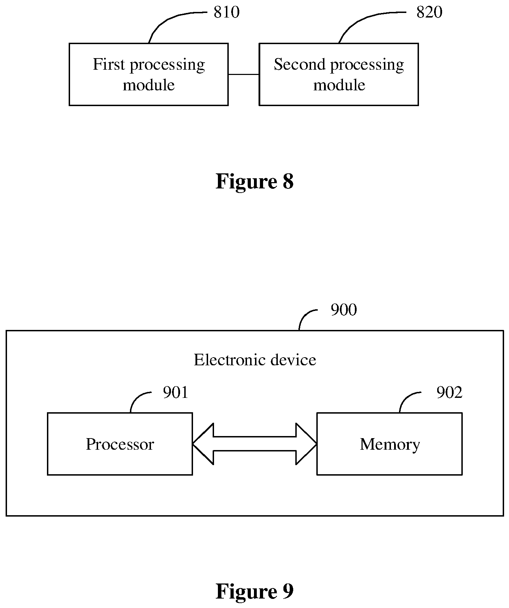

As shown in Figure 8, the energy storage control apparatus for the micro-grid system includes:

a first processing module 810 configured to, for a target period within the first operation period, obtain a first control parameter of the energy storage unit 220 in the target period based on first predicted operation parameters of the micro-grid system in the target period via a first control model;

a second processing module 820 configured to, for a target period within a second operation period, obtain a second control parameter of the energy storage unit 220 in the target period based on first historical state parameters of the micro-grid system before the target period via a second control model.

The second operation period is after the first operation period, and the first predicted operation parameters include a first predicted generated power value of power-generation, a first predicted load power value and a first predicted electricity price value of the micro-grid system, the first historical state parameters include a first actual generated power value of power-generation, a first actual load power value, a first actual electricity price value and a first state of charge for energy storage of the micro-grid system.

The first control model and the second control model are obtained in advance, the first control model is a dynamic programming model, and the second control model is trained through a reinforcement learning algorithm.

According to the energy storage control apparatus of the micro-grid system provided by the embodiments of the present disclosure, by dividing the time scales of the micro-grid system operation, the solution of dynamic programming model is used in the first operation period, and the solution of model using deep reinforcement learning algorithm is used in the second operation period, which can realize the energy storage regulation of the entire life cycle of the micro-grid system and effectively reduce the user electricity cost.

In some embodiments, when the target period is within the second operation period, the second processing module 820 is further configured to obtain a third control parameter of the energy storage unit 220 in the target period based on second predicted operation parameters of the micro-grid system in the target period via the first control model.

The second predicted operation parameters include a second predicted generated power value of power-generation, a second predicted load power value and a second predicted electricity price value of the micro-grid system, the second predicted operation parameters are outputs of a micro-grid system prediction model, and the micro-grid system prediction model is obtained by training based on samples of operation parameters of the micro-grid system.

In some embodiments, the second processing module 820 is further configured to control operation of the energy storage unit 220 based on the second control parameter or the third control parameter in the target period.

In some embodiments, the second processing module 820 is further configured to acquire first evaluation parameters of the micro-grid system operating in a second historical operation period based on the third control parameter outputted by the first control model and second evaluation parameters of the micro-grid system operating based on the second control parameter outputted by the second control model;

on determining that the first evaluation parameters are superior to the second evaluation parameters, control operation of the energy storage unit 220 based on the third control parameter;

on determining that the second evaluation parameters are superior to the first evaluation parameters, control operation of the energy storage unit 220 based on the second control parameter;

where the second historical operation period is a period within the second operation period, and the second historical operation period is before the target period.

In some embodiments, the first evaluation parameters include at least two of a first electricity expenditure, a first energy storage capacity decay cost and a first self-consumption rate; the second evaluation parameters include at least two of a second electricity expenditure, a second energy storage capacity decay cost and a second self-consumption rate; and the second processing module 820 is configured to determine that at least two parameters from the first evaluation parameters are superior to corresponding parameters from the second evaluation parameters.

In some embodiments, the first predicted operation parameters in the target period are determined based on operation parameters of one or more first historical operation periods adjacent to the target period, and the one or more first historical operation periods are periods within the first operation period.

In some embodiments, the first predicted operation parameter is a weighted average value of operation parameters of a plurality of the first historical operation periods, and weight coefficients corresponding to the respective first historical operation periods are proportional to the adjacency between the respective first historical operation periods and the target period.

In some embodiments, the first control model is a dynamic programming model targeting lowest electricity cost of the micro-grid system, a minimum capacity decay cost of the energy storage unit 220 and a maximum self-consumption rate of the new energy power generation unit 210.

In some embodiments, the second control model is trained through the steps as follows:

establishing an environment to operate the micro-grid system, with the energy storage unit as an intelligent agent;

based on a state of the environment at a current moment, outputting an action of the intelligent agent; and based on the action of the agent, feeding back, by the environment, a state and a reward at a next moment;

obtaining the second control model via iterative training;

where the state of the environment includes a load power, a generated power of new energy power generation, an electricity price, a state of charge for energy storage and energy storage output data, the action of the intelligent agent is an output direction and power magnitude of the energy storage unit 220, and the reward of environmental includes an electricity cost reward, a reward for state of charge within a limit, an energy storage capacity decay cost reward, and a self-consumption rate reward.

The energy storage control apparatus of the micro-grid system in the embodiment of the present disclosure may be an electronic device or a component in the electronic device, such as an integrated circuit or chip. The electronic device may be a terminal or other devices. For example, the electronic device may be a mobile phone, a tablet computer, a notebook computer, a handheld computer, a vehicle-mounted electronic device, a mobile Internet device (MID), or an augmented reality (AR)/virtual reality (VR) device, a robot, a wearable device, a ultra-mobile personal computers (UMPC), a netbook or personal digital assistant (PDA), etc., and may also be a server, network attached storage (NAS), personal computer (PC), television (TV), teller machine or self-service machine, etc., which is not specifically limited in the embodiments of the present disclosure.

The energy storage control apparatus of the micro-grid system in the embodiment of the present disclosure may be a device with an operating system. The operating system may be an Android operating system, an IOS operating system, or other possible operating systems, which is not specifically limited in the embodiments of the present disclosure.

The energy storage control apparatus of the micro-grid system in the embodiment of the present disclosure can implement each process implemented by the method embodiment in Figure 1. To avoid duplication, the details of which are not repeated here.

A micro-grid system is further provided according to an embodiment of the present disclosure.

As shown in Figure 2, the micro-grid system includes: a new energy power generation unit 210, an energy storage unit 220, a load unit 230 and an energy management unit 240.

The new energy power generation unit 210 may convert new energy into electric energy, the energy storage unit 220 may temporarily store electric energy, and the load unit 230 is a device that consumes electric energy.

The new energy power generation unit 210 may be a photovoltaic power generation unit, a wind energy power generation unit, or other apparatus that uses new energy to generate electricity.

The micro-grid system may use the electric energy generated by the new energy power generation unit 210, the electric energy of the energy storage unit 220, or the electric energy connected to the power grid 270.

In this embodiment, the micro-grid system may further include a grid power metering apparatus 260. The grid power metering apparatus 260 may measure the power acquired from the power grid. According to the power measured by the grid power metering apparatus 260 and the grid power price, the electricity cost of the micro-grid system may be determined.

In a practical implementation, the power grid power metering apparatus 260 may be an electric meter, a current transformer (CT), a PCS, or other device that can measure the electric energy acquired from the power grid.

The energy management unit 240 is connected to the new energy power generation unit 210, the energy storage unit 220 and the load unit 230. The energy management unit 240 is configured to determine the control parameters (power magnitude and output direction) of the energy storage unit 220 based on the energy storage control method for the micro-grid system to control the operation of the energy storage unit 220.

The micro-grid system may further include an energy converter 250. The energy converter 250 may be connected to the new energy power generation unit 210, the energy storage unit 220 and the load unit 230. The energy management unit 240 is connected to the energy converter 250. The energy management unit 240 controls the power magnitude and output direction of the energy storage unit 220 through the energy converter 250.

In this embodiment, the energy management unit 240 is a control unit of the micro-grid system, which is used to implement the energy storage control method for the micro-grid system, collect historical operation data of the micro-grid system, and issue regulation commands to each terminal device in the micro-grid system.

The energy management unit 240 may automatically diagnose the battery pack state of the energy storage unit 220 and perform intelligent regulation based on real-time data to ensure efficient and stable operation of the micro-grid system.

The energy management unit 240 supports a variety of communication interfaces, such as Modbus RTU, TCP/IP and the like. It may be linked to and implement cooperative control with other devices.

The energy management unit 240 may further collect and store historical operation data of the micro-grid system, and provide rich data query and analysis functions to help users understand the operation of system better.

The energy management unit 240 may manage the micro-grid system, optimize energy consumption, and reduce costs better through intelligent regulation at different time scales. The rich communication interfaces and data management functions can help users understand the operation of the energy storage power station better, which improves system reliability and stability.

According to the micro-grid system provided by the embodiment of the present disclosure, by dividing the time scales of the operation of the micro-grid system, the solution of dynamic programming model is used in the first operation period, and the solution of model using deep reinforcement learning algorithm is used in the second operation period. In this way, the energy storage regulation of the entire life cycle of the micro-grid system can be realized, effectively reducing the user electricity cost.

In some embodiments, as shown in Figure 9, an electronic device 900 is further provided according to the embodiments of the present disclosure, which includes a processor 901, a memory 902, and a computer program stored in the memory 902 and executable on the processor 901, when the program is executed by the processor 901, processes of the energy storage control method for the micro-grid system according to the above embodiments may be implemented and the same technical effect may be achieved. To avoid duplication, the details of which are not repeated here.

It should be noted that the electronic device in the embodiments of the present disclosure include the above-mentioned mobile electronic device and non-mobile electronic device.

A non-transitory computer readable storage medium is further provided according to the embodiments of the present disclosure. The non-transitory computer readable storage medium stores a computer program thereon, where the computer program, when executed by a processor, implements processes of the energy storage control method for the micro-grid system according to the above embodiments and can achieve the same technical effect. To avoid duplication, the details of which are not repeated here.

The processor is the processor in the electronic device described in the above embodiment. The readable storage medium includes computer readable storage medium, such as a computer read-only memory ROM, random access memory RAM, magnetic disk or optical disk, etc.

A computer program product is further provided according to the embodiments of the present disclosure, which includes a computer program, which implements the above energy storage control method for the micro-grid system when executed by a processor.

The processor is the processor in the electronic device described in the above embodiment. The readable storage medium includes computer readable storage medium, such as a computer read-only memory ROM, random access memory RAM, magnetic disk or optical disk, etc.

A chip is further provided according to the embodiments of the present disclosure. The chip includes a processor and a communication interface. The communication interface is coupled to the processor. The processor is used to run programs or instructions to implement processes of the energy storage control method for the micro-grid system according to the above embodiments and can achieve the same technical effect. To avoid duplication, the details of which are not repeated here.

It should be understood that the chip mentioned in the embodiments of this disclosure may also be referred to as a system-level-chip, system chip, chip system or system-on-chip, etc.

It should be noted that, in this document, the term "comprise", "include" or any other variation thereof is intended to cover a non-exclusive inclusion such that a process, method, product, or apparatus comprising a set of elements includes not only those elements, but also includes other elements that are not explicitly listed, or also includes elements inherent in such a process, method, product, or apparatus. Without further limitations, an element defined by the phrase "comprising/including alan ..." does not exclude the existence of additional identical elements in the process, method, product or apparatus comprising said element. In addition, it should be pointed out that the scope of the methods and apparatus in the embodiments of the present disclosure is not limited to performing functions in the order shown or discussed, but may also include implementing functions in a substantially simultaneous manner or in reverse order according to the functions involved. For example, the methods described may be implemented in an order different from that described, where various steps may be added, omitted, or combined. Additionally, features described with reference to certain examples may be combined in other examples.

Through the above description of the embodiments, those skilled in the art can clearly understand that the methods of the above embodiments can be implemented by means of software plus the necessary general hardware platform. Apparently, it may also be implemented by hardware, but in many cases the former is better. Based on this understanding, the technical solution of the present disclosure can be embodied in the form of a computer software product that is essentially or contributes to the existing technology. The computer software product is stored in a storage medium (such as ROM/RAM, disk, CD), including several instructions to cause a terminal (which may be a mobile phone, computer, server, network device or the like) to implement the methods described in various embodiments of the present disclosure.

The embodiments of the present disclosure have been described above in conjunction with the accompanying drawings. However, the present disclosure is not limited to the above-mentioned specific implementations. The above-mentioned specific implementations are only illustrative and not restrictive. For those ordinary skilled in the art, who is enlightened by the present disclosure, various forms may be made without departing from the purpose of the present disclosure and the scope protected by the claims, all of which fall within the protection of the present disclosure.

Any reference in this specification to "an embodiment", "some embodiments", "certain embodiments", "exemplary embodiments", "an example", "a specific example", "an implementation" or "some examples" or the like means that specific features, structures, materials or characteristics described in combination with the embodiment or example is included in at least one embodiment or example of the present disclosure. In the specification, the schematic expressions of the above terms do not necessarily refer to the same embodiment or example. Furthermore, the specific features, structures, materials or characteristics described may be combined in any one or more embodiments or examples in a suitable manner.

Although the embodiments of the present disclosure are shown and described, those ordinary skilled in the art should understand that various changes, modifications, substitutions and alterations may be made to these embodiments without departing from the principle and spirit of the present disclosure, and the scope of the present disclosure is defined by the claims and their equivalents.

**Claims**

1. An energy storage control method for a micro-grid system, wherein the micro-grid system comprises a new energy power generation unit, an energy storage unit and a load unit, and the method comprises:

   for a target period within a first operation period, obtaining, via a first control model, a first control parameter of the energy storage unit in the target period, based on first predicted operation parameters of the micro-grid system in the target period; and
   for a target period within a second operation period, obtaining, via a second control model, a second control parameter of the energy storage unit in the target period, based on first historical state parameters of the micro-grid system before the target period;
   wherein the second operation period is after the first operation period, and the first predicted operation parameters comprise a first predicted generated power value of power-generation, a first predicted load power value and a first predicted electricity price value of the micro-grid system, the first historical state parameters comprise a first actual generated power value of power-generation, a first actual load power value, a first actual electricity price value and a first state of charge for energy storage of the micro-grid system;
   the first control model and the second control model are obtained in advance, the first control model is a dynamic programming model, and the second control model is trained through a reinforcement learning algorithm.

2. The energy storage control method for the micro-grid system according to claim 1, wherein for the target period within the second operation period, the method further comprises:

   based on second predicted operation parameters of the micro-grid system in the target period, obtaining, via a first control model, a third control parameter of the energy storage unit in the target period;
   wherein the second predicted operation parameters comprise a second predicted generated power value of power-generation, a second predicted load power value and a second predicted electricity price value of the micro-grid system, the second predicted operation parameters are predicted values outputted by a micro-grid system prediction model, the micro-grid system prediction model is obtained by training based on samples of operation parameters of the micro-grid system;
   after obtaining the third control parameter of the energy storage unit in the target period, the method further comprises: in the target period, controlling operation of the energy storage unit based on the second control parameter or the third control parameter.

3. The energy storage control method for the micro-grid system according to claim 2, wherein in the target period, the controlling operation of the energy storage unit based on the second control parameter or the third control parameter comprises:

acquiring first evaluation parameters of the micro-grid system operating, in a second historical operation period, based on the third control parameter outputted by the first control model and second evaluation parameters of the micro-grid system operating, in the second historical operation period, based on the second control parameter outputted by the second control model;

on determining that the first evaluation parameters are superior to the second evaluation parameters, controlling operation of the energy storage unit based on the third control parameter;

on determining that the second evaluation parameters are superior to the first evaluation parameters, controlling operation of the energy storage unit based on the second control parameter;

wherein, the second historical operation period is a period within the second operation period, and the second historical operation period is before the target period.

4. The energy storage control method for the micro-grid system according to claim 3, wherein the first evaluation parameters comprise at least two of a first electricity expenditure, a first energy storage capacity decay cost and a first self-consumption rate; the second evaluation parameters comprise at least two of a second electricity expenditure, a second energy storage capacity decay cost and a second self-consumption rate; and the determining that the first evaluation parameters are superior to the second evaluation parameters comprises:

determining that at least two parameters from the first evaluation parameters are superior to corresponding parameters from the second evaluation parameters.

5. The energy storage control method for the micro-grid system according to claim 1, wherein the first predicted operation parameter in the target period is determined based on operation parameters in one or more first historical operation periods adjacent to the target period, and the first historical operation period is within the first operation period.

6. The energy storage control method for the micro-grid system according to claim 5, wherein the first predicted operation parameter is a weighted average of operation parameter values in a plurality of the first historical operation periods, and weight coefficients corresponding to the respective first historical operation periods are proportional to the adjacency between the respective first historical operation periods and the target period.

7. The energy storage control method for the micro-grid system according to any one of claims 1 to 6, wherein the first control model is the dynamic programming model targeting at a lowest electricity cost of the micro-grid system, a minimum capacity decay cost of the energy storage unit and a maximum self-consumption rate of the new energy power generation unit.

8. The energy storage control method for the micro-grid system according to any one of claims 1 to 6, wherein the second control model is trained by:

establishing an environment to operate the micro-grid system, with the energy storage unit as an intelligent agent; based on a state of the environment at a current moment, outputting an action of the intelligent agent; and based on the action of the agent, feeding back, by the environment, a state and a reward at a next moment; and obtaining the second control model via iterative training;

wherein the state of the environment comprises a load power, a generated power of new energy power generation, an electricity price, an state of charge for energy storage and energy storage output data, the action of the intelligent agent includes an output direction and power magnitude of the energy storage unit, and the reward of environmental comprises an electricity cost reward, a reward for state of charge within a limit, an energy storage capacity decay cost reward, and a self-consumption rate reward.

9. An energy storage control apparatus for a micro-grid system, wherein the micro-grid system comprises a new energy power generation unit, an energy storage unit and a load unit, and the apparatus comprises:

a first processing module, configured to, for a target period within a first operation period, obtain a first control parameter of the energy storage unit in the target period based on first predicted operation parameters of the micro-grid system in the target period via a first control model; and

a second processing module, configured to, for a target period within a second operation period, obtain a second control parameter of the energy storage unit in the target period based on first historical state parameters of the micro-grid system before the target period via a second control model;

wherein the second operation period is after the first operation period, and the first predicted operation parameters comprise a first predicted generated power value of power-generation, a first predicted load power value and a first predicted electricity price value of the micro-grid system, the first historical state parameters comprise a first actual generated power value of power-generation, a first actual load power value, a first actual electricity price value and a first state of charge for energy storage of the micro-grid system;

the first control model and the second control model are obtained in advance, the first control model is a dynamic programming model, and the second control model is trained through a reinforcement learning algorithm.

10. A micro-grid system comprising:

a new energy power generation unit;
an energy storage unit;
a load unit; and
an energy management unit, wherein the energy management unit is connected to the new energy power generation unit, the energy storage unit and the load unit, the energy management unit is configured to determine control parameters of the energy storage unit and control operation of the energy storage unit based on the energy storage control method for the micro-grid system according to any one of claims 1 to 8.

11. An electronic device comprising:

a memory;
a processor; and
a computer program stored in the memory and executable on the processor;
wherein the processor, when executing the program, implements the energy storage control method for the micro-grid system according to any one of claims 1 to 8.

12. A non-transitory computer readable store medium storing a computer program thereon, wherein the computer program, when executed by a processor, implements the energy storage control method for the micro-grid system according to any one of claims 1 to 8.

13. A computer program product comprising a computer program, wherein the computer program, when executed by a processor, implements the energy storage control method for the micro-grid system according to any one of claims 1 to 8.

For a target period within a first operation period, obtain first control parameters of the energy storage unit in the target period via a first control model, based on first predicted operation parameters of the micro-grid system in the target period

110

For a target period within a second operation period, obtain the second control parameter of the energy storage unit in the target period via a second control model, based on first history state parameters of the micro-grid system before the target period

120

**Figure 1**

**Figure 2**

**Figure 3**

Figure 4

Figure 5

Figure 6

Non-intelligent regulation strategy  User electricity cost RMB 1.4002

load
pv

Energy storage output power in accordance with intelligent regulation strategy

Energy storage SOC in accordance with intelligent regulation strategy

Electricity price RMB/KWh

**Figure 7**

810

820

First processing
module

Second processing
module

**Figure 8**

900

Electronic device

901

902

Processor

Memory

**Figure 9**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/416540 A1 (ENDO HIROAKI [JP] ET AL) 29 December 2022 (2022-12-29)<br>* figure 1 *<br>* paragraphs [0059] - [0076] *<br>- - - - - | 1-13 | INV.<br>H02J3/00<br>H02J3/32<br>H02J3/38 |
| X | WO 2023/030638 A1 (ERICSSON TELEFON AB L M [SE]) 9 March 2023 (2023-03-09)<br>* figure 1 *<br>* paragraphs [0031] - [0032] *<br>- - - - - | 1-13 | |
| X | US 2018/226800 A1 (BHATTARAI BISHNU P [US] ET AL) 9 August 2018 (2018-08-09)<br>* figure 1 *<br>* paragraphs [0028] - [0033] *<br>- - - - - | 1-13 | |

TECHNICAL FIELDS
SEARCHED      (IPC)

H02J

The present search report has been drawn up for all claims

| Place of search | Date of completion of the search | Examiner |
|---|---|---|
| Munich | 10 June 2024 | Berger, Josef |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 9071

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | | Publication date | Patent family member(s) | | Publication date |
|---|---|---|---|---|---|
| US 2022416540 | A1 | 29-12-2022 | CN | 114514666 A | 17-05-2022 |
| | | | JP | 7404751 B2 | 26-12-2023 |
| | | | JP | 2021061697 A | 15-04-2021 |
| | | | JP | 2024020630 A | 14-02-2024 |
| | | | US | 2022416540 A1 | 29-12-2022 |
| | | | WO | 2021070704 A1 | 15-04-2021 |
| WO 2023030638 | A1 | 09-03-2023 | NONE | | |
| US 2018226800 | A1 | 09-08-2018 | NONE | | |

EPO FORM P0459

For more details about this annex : see Official Journal of the European Patent Office, No. 12/82